# EUROPÄISCHE PATENTSCHRIFT

(11) **EP 3 610 545 B1**
(45) Veröffentlichungstag und Bekanntmachung des Hinweises auf die Patenterteilung: **30.06.2021**
(21) Anmeldenummer: 17723968.8
(22) Anmeldetag: 09.05.2017
(51) Int. Cl.: H02J 3/06, H02J 3/18

(54) **ÜBERTRAGUNGS-EINRICHTUNG ZUR ENERGIEÜBERTRAGUNG ZWISCHEN MEHREREN ELEKTRISCHEN ENERGIENETZEN**
TRANSMISSION DEVICE FOR ENERGY TRANSMISSION BETWEEN MULTIPLE ELECTRICAL ENERGY NETWORKS
SYSTÈME DE TRANSMISSION D'ÉNERGIE ENTRE PLUSIEURS RÉSEAUX ÉLECTRIQUES

(43) Veröffentlichungstag der Anmeldung: 19.02.2020
(73) Patentinhaber: Siemens Energy Global GmbH & Co. KG, 81739 München (DE)
(72) Erfinder: KAMMERER, Felix, 91058 Erlangen (DE); PIESCHEL, Martin, 90473 Nürnberg (DE)
(86) Internationale Anmeldenummer: PCT/EP2017/060997
(87) Internationale Veröffentlichungsnummer: WO 2018/206083

(56) Entgegenhaltungen:
- EP-A1- 1 657 809
- EP-A1- 2 290 799
- CN-A- 106 532 714
- DE-A1-102015 220 220
- HEINEMANN L ED - INSTITUTE OF ELECTRICAL AND ELECTRONICS ENGINEERS: "An actively cooled high power, high frequency transformer with high insulation capability", APEC 2002. 17TH. ANNUAL IEEE APPLIED POWER ELECTRONICS CONFERENCE AND EXPOSITION. DALLAS, TX, MARCH 10 - 14, 2002; [ANNUAL APPLIED POWER ELECTRONICS CONFERENCE], NEW YORK, NY : IEEE, US, Bd. CONF. 17, 10. März 2002 (2002-03-10), Seiten 352-357, XP010582944, DOI: 10.1109/APEC.2002.989270 ISBN: 978-0-7803-7404-1

## Beschreibung

Die Erfindung betrifft eine Übertragungs-Einrichtung zur Energieübertragung zwischen mehreren elektrischen Energienetzen gemäß dem Oberbegriff des Anspruchs 1.

Es ist bekannt, zur Energieübertragung zwischen zwei elektrischen Drehstromnetzen einen (Stell-)Transformator als passive Übertragungs-Einrichtung zu verwenden, durch den die beiden Drehstromnetze galvanisch getrennt miteinander gekoppelt sind.

Nachteilig ist dabei, dass keine dynamische Kontrolle der Leistungsflüsse möglich ist. Hinzu kommt der große Materialbedarf und es entstehen im Leerlauf beträchtliche Verluste. Weiter ist eine Kopplung asynchroner Netze nicht möglich.

Bekannt sind Transformatoren mit einem Gleichspannungs-Zwischenkreis, der mittels Hochfrequenztransformatoren den Leistungsfluss steuert und asynchrone Drehstromnetze galvanisch getrennt voneinander koppelt. Nachteilig ist bei dieser Steuerung des Leistungsflusses, dass mindestens ein Gleichspannungs-Zwischenkreis erforderlich ist, um die mit einem starken Spannungsanstieg verbundenen Belastungen zu vermeiden. Der Gleichspannungs-Zwischenkreis weist dabei eine große Anzahl an Leistungshalbleitern auf, was wiederum die Ausfallwahrscheinlichkeit deutlich erhöht. Ein weiterer Nachteil ist die fehlende Möglichkeit, diese als kombinierte Längs- und Querregler zu verwenden (s. hierzu "The J&P Transformer Book" von A.C. Franklin und D.P. Franklin, 1983, 11th Edition, Kapitel "Voltage variation by tap changing", Seite 279).

Die europäische Patentanmeldung EP 1 657 809 A1 offenbart eine Übertragungs-Einrichtung zur Energieübertragung mit einem Wechselspannungseingang und einem Wechselspannungsausgang. Der Wechselspannungseingang ist über zwei Stromrichter mit einem ersten Anschluss eines Hochfrequenztransformators verbunden, ein zweiter Anschluss des Hochfrequenztransformators ist über zwei weitere Stromrichter mit dem Wechselspannungsausgang verbunden.

Aus der Schrift "An actively cooled high power, high frequency transformer with high insulation capability" von L. Heinemann, LED - Institute of Electrical and Electronics Engineers, 17TH. Annual IEEE Applied Power Electronics Conference And Exposition, March 10 - 14, 2002; IEEE, US, Bd. Conf. 17, 10. März 2002, Seiten 352-357 ist ein aktiv gekühlter Hochfrequenztransformator für große Leistungen bekannt. Dieser Hochfrequenztransformator ist zur Anwendung bei einem Multilevel-Stromrichter vorgesehen.

Die Aufgabe der Erfindung ist es, eine Übertragungs-Einrichtung ohne Gleichspannungs-Zwischenkreis für mehrphasige Energienetze (Drehstromnetze) vorzuschlagen, bei der die Energienetze galvanisch getrennt gekoppelt sind und eine dynamische Kontrolle der Leistungsflüsse möglich ist.

Die Aufgabe wird durch die Merkmale des Anspruchs 1 gelöst; die Unteransprüche stellen vorteilhafte Ausgestaltungen dar.

Als Lösung wird eine Übertragungs-Einrichtung vorgeschlagen, die mehrphasige Mehrstufen-Stromrichter aufweist, welche jeweils mit einem der Energienetze (an deren Versorgungs-Anschlüsse) und miteinander über einen ersten mehrphasigen Transformator und damit galvanisch voneinander getrennt verbunden sind, über den bei einer vorgegebenen Übertragungsfrequenz elektrische Energie zumindest zeitweise von zumindest einem Energie abgebenden Energienetz in zumindest ein Energie aufnehmendes Energienetz fließt, wobei die Übertragungsfrequenz größer als jede der Netzfrequenzen ist. Weiter weist die Übertragungs-Einrichtung eine Steuereinrichtung (Ansteuereinheit) auf, welche durch Steuerung der Mehrstufen-Stromrichter die Energieübertragung in das zumindest eine Energie aufnehmende Energienetz entsprechend einer Sollvorgabe einstellt.

Zweckmäßigerweise sind die mehrphasigen Energienetze dreiphasig oder zweiphasig und die Mehrstufen-Stromrichter weisen korrespondierend dazu zum jeweiligen Netz hin (netzseitig) drei bzw. zwei Phasenanschlüsse auf.

In einem Ausführungsbeispiel außerhalb der Erfindung weist der Transformator zwei Anschlussseiten (z.B. eine Primärseite und eine Sekundärseite) auf und ist auf beiden Anschlussseiten entweder dreiphasig oder zweiphasig ausgebildet. Oder aber der Transformator ist auf einer Anschlussseite dreiphasig und auf der anderen Anschlussseite zweiphasig ausgebildet. Die Mehrstufen-Stromrichter weisen dann jeweils korrespondierend zu den Anschlussseiten des Transformators trafoseitig drei bzw. zwei Phasenanschlüsse auf.

Der Transformator weist erfindungsgemäß eine dreiphasige Anschlussseite und drei zweiphasige Anschlussseiten auf, wobei an den zweiphasigen Anschlussseiten jeweils ein Mehrstufen-Stromrichter mit trafoseitig zwei Phasenanschlüssen angeschlossen ist.

Alternativ ist mit Vorteil ein Mehrstufen-Stromrichter über den ersten Transformator mit einem zweiten Mehrstufen-Stromrichter und (gleichzeitig, quasi parallel) über einen zweiten Transformator mit einem dritten Mehrstufen-Stromrichter verbunden, wobei der zweite und dritte Mehrstufen-Stromrichter über den ersten und zweiten Transformator miteinander verbunden sind.
Um eine dynamische Kontrolle der Leistungsflüsse zu erzielen, ist jeder Mehrstufen-Stromrichter für jede Phase aus zwei in Reihe geschalteten Stromrichter-Modulen gebildet, wobei die elektrischen Verbindungen zwischen den Stromrichter-Modulen die netzseitigen Phasenanschlüsse bilden, die mit dem Energienetz verbunden sind.

Dabei ist vorteilhafterweise jedes Stromrichter-Modul aus einer Vielzahl in Reihe geschalteter Submodule und einer Induktivität gebildet, die von der Ansteuereinheit (Steuereinrichtung) gesteuerte Halbleiterschalter aufweisen, welche in Vollbrückenschaltung ausgeführt sind.

Um die Leistungsflüsse dynamisch zu kontrollieren und den (Energie-)Strom, d.h. die pro Zeiteinheit zu übertragende elektrische Energie, von der Steuereinrichtung einzustellen, erfolgt jeweils eine Erfassung des elektrischen Stroms durch die Mehrstufen-Stromrichter und der Anschlussspannungen (an den Versorgungs-Anschlüssen) der Energienetze.

Es zeigen:
- Fig. 1: eine erste Anordnung mit zwei dreiphasigen elektrischen Energienetzen, die über eine Übertragungs-Einrichtung gekoppelt sind,
- Fig. 2: eine zweite Anordnung mit drei dreiphasigen Energienetzen, die über eine gemeinsame Übertragungs-Einrichtung gekoppelt sind,
- Fig. 3: eine dritte Anordnung zweier dreiphasiger Energienetze mit einer zwischen die beiden Energienetze geschalteten Übertragungsleitung,
- Fig. 4: eine vierte Anordnung dreier dreiphasiger Energienetze mit zwei zwischen die Energienetze geschalteten Übertragungsleitungen,
- Fig. 5: eine fünfte Anordnung zweier dreiphasiger Energienetze mit einer zwischen die beiden Energienetze geschalteten Übertragungsleitung,
- Fig. 6: eine erste Ausführung der Übertragungs-Einrichtung der ersten und dritten Anordnung,
- Fig. 7: eine zweite Ausführung der Übertragungs-Einrichtung der ersten und dritten Anordnung,
- Fig. 8: eine dritte Ausführung der Übertragungs-Einrichtung der zweiten und vierten Anordnung,
- Fig. 9: eine vierte Ausführung der Übertragungs-Einrichtung der zweiten und vierten Anordnung,
- Fig. 10: eine fünfte Ausführung der Übertragungs-Einrichtung der fünften Anordnung, die vier MehrstufenStromrichter aufweist,
- Fig. 11: einen Mehrstufen-Stromrichter mit drei netzseitigen und zwei trafoseitigen Phasenanschlüssen,
- Fig. 12: einen Mehrstufen-Stromrichter mit drei netzseitigen und drei trafoseitigen Phasenanschlüssen,
- Fig. 13: einen Mehrstufen-Stromrichter mit zwei netzseitigen und zwei trafoseitigen Phasenanschlüssen,
- Fig. 14: ein Stromrichter-Modul mit einer Vielzahl in Reihe geschalteter Submodule,
- Fig. 15: ein Submodul mit einem Powermodul, einem Gleichspannungs-Zwischenkreis und einem Kondensatormodul,
- Fig. 16: den Aufbau des Powermoduls und
- Fig. 17: den Aufbau des Kondensatormoduls.

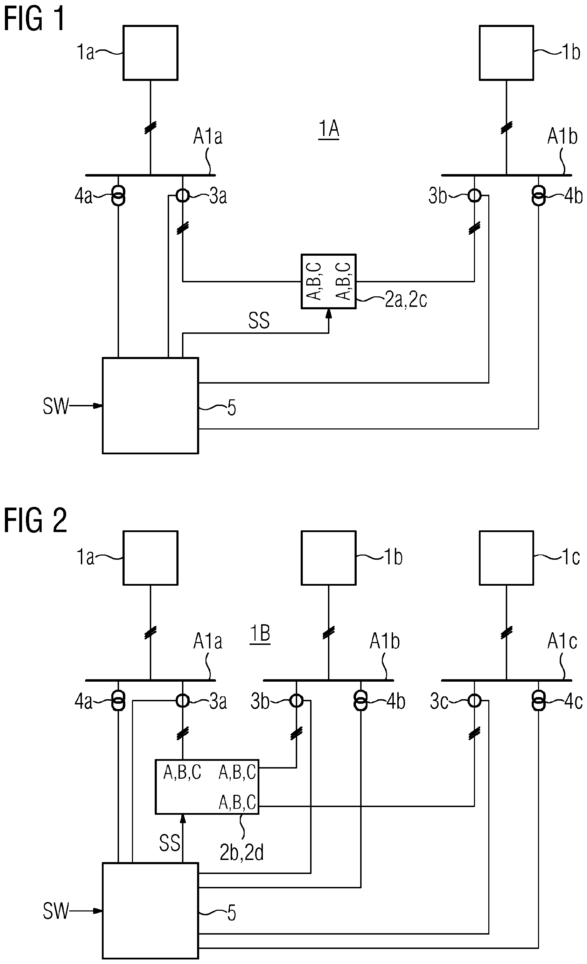

In Fig. 1 ist eine erste Anordnung 1A mit zwei dreiphasigen elektrischen Energienetzen (Energie-Versorgungsnetzen) 1a und 1b gezeigt, bei denen es sich um Drehstromnetze mit jeweils einer festen Netzfrequenz handelt. Die Energienetze 1a, 1b stellen zur elektrischen Energieversorgung jeweils eine dreiphasige Anschlussspannung an Versorgungs-Anschlüssen bereit, die als Anschlussschienen A1a, A1b ausgebildet sind.

Die beiden Energienetze 1a, 1b sind über eine Übertragungs-Einrichtung 2a, 2c (auch elektronischer Trafo genannt) gekoppelt, welche jeweils mit einem der Energienetze 1a, 1b (mit deren Anschlussschienen A1a, A1b) verbunden sind.

Mittels Spannungssensoren 4a, 4b (die hier als Messwandler ausgeführt sind) werden die an den Anschlussschienen A1a, A1b liegenden Anschlussspannungen (Anschlusswechselspannungen) gemessen. Weiter messen Stromsensoren 3a, 3b die in oder aus den Energienetzen 1a und 1b über die Übertragungs-Einrichtung 2a, 2c fließenden elektrischen Ströme. Die Strommesswerte 3a, 3b und die Spannungsmesswerte 4a, 4b werden von einer gemeinsamen Steuereinrichtung 5 verarbeitet, welche die Energieübertragung von dem Energie abgebenden Energienetz 1a oder 1b in das Energie aufnehmende Energienetz 1b bzw. 1a anhand einer Sollvorgabe SW und der Messwerte der Sensoren 3a, 3b, 4a, 4b einstellt. Die Sollvorgabe SW bezieht sich auf die jeweils zu übertragende Wirk- und/oder Blindleistung zwischen den Energienetzen 1a, 1b.

Die Steuereinrichtung 5 berechnet jeweils Steuersignale SS, die zu der Übertragungs-Einrichtung 2a, 2c übertragen werden. Mittels der Steuersignale SS wird die Übertragungs-Einrichtung 2a, 2c derart gesteuert, dass sich jeweils die gewünschte Energieübertragung einstellt. Die Steuereinrichtung 5 kontrolliert und steuert auf diese Weise die Übertragungs-Einrichtung 2a, 2c.

Fig. 2 zeigt eine zweite Anordnung 1B, die im Unterschied zur ersten Anordnung 1A drei elektrische Energienetze 1a, 1b, 1c aufweist, die jeweils eine dreiphasige Anschlussspannung (an Anschlussschienen A1a, A1b, A1c) zur elektrischen Energieversorgung bereitstellen.

Wie in Fig. 1 sind die drei Energienetze 1a, 1b, 1c über eine gemeinsame Übertragungs-Einrichtung 2b, 2d mit mehreren Abgängen gekoppelt. Anhand der Messwerte der Sensoren 3a, 3b, 3c und 4a, 4b, 4c sowie der Sollvorgaben SW berechnet die Steuereinrichtung 5 jeweils entsprechende Steuersignale SS und gibt diese an die Übertragungs-Einrichtung 2b, 2d zur Steuerung der Energieübertragung aus.

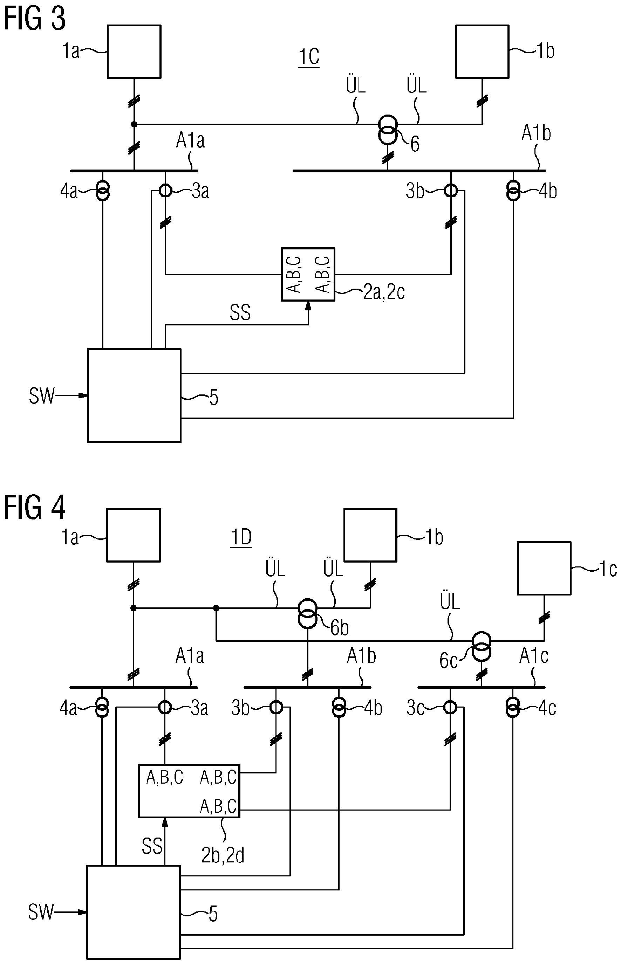

In Fig. 3 ist eine dritte Anordnung 1C gezeigt, die analog zur ersten Anordnung 1A zwei dreiphasige Energienetze 1a und 1b aufweist, wobei im Unterschied zur ersten Anordnung 1A an einer Übertragungsleitung ÜL zwischen den beiden Energienetzen 1a und 1b die Übertragungs-Einrichtung 2a, 2c über einen Transformator 6 in Reihe zwischen die beiden Energienetze 1a und 1b geschaltet ist. Dies entspricht einem Unified Power Flow Controller (UPFC).

In Fig. 4 ist eine vierte Anordnung 1D dargestellt, die analog zur zweite Anordnung 1B drei dreiphasige elektrische Energienetze 1a, 1b, 1c aufweist, wobei im Unterschied zur zweiten Anordnung 1B an einer Übertragungsleitung zwischen den drei Energienetzen 1a, 1b und 1c die gemeinsame Übertragungs-Einrichtung 2b, 2d mit mehreren Abgängen über einen zweiten und dritten Transformator 6b und 6c in Reihe zwischen die Energienetze 1a, 1b, 1c geschaltet ist. Dies entspricht einem Unified Power Flow Controller (UPFC)für mehrere Abgänge.

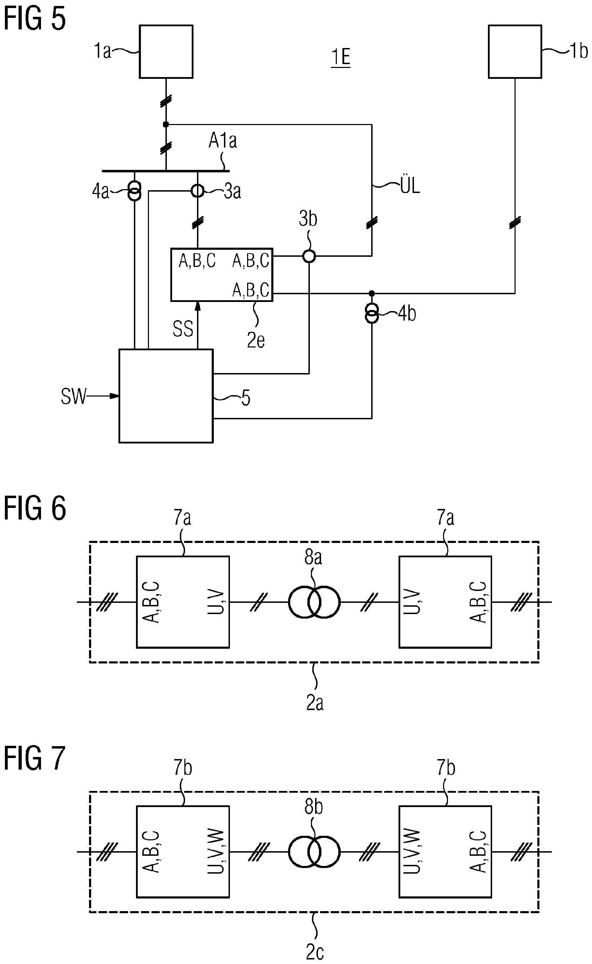

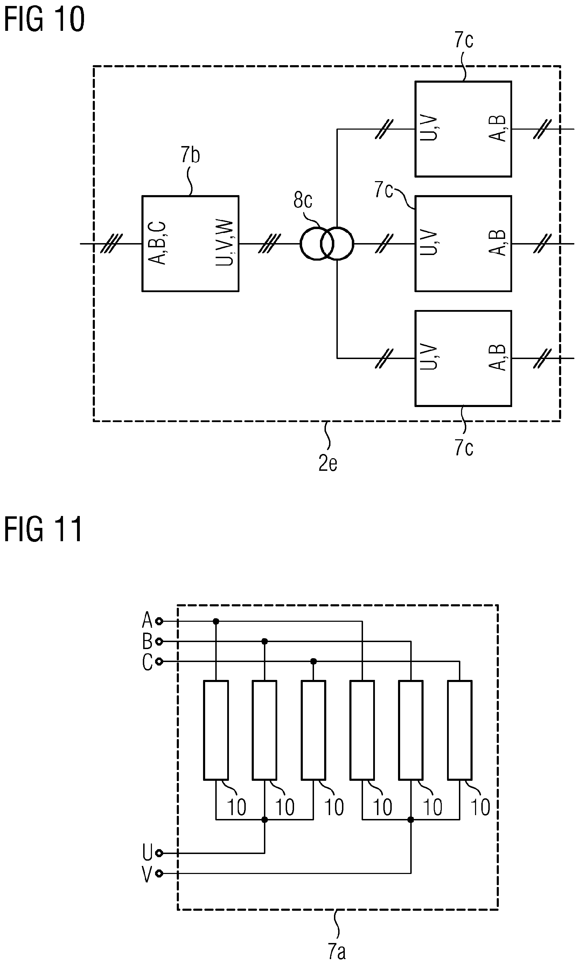

In Fig. 5 ist eine fünfte Anordnung 1E dargestellt, die analog zur ersten Anordnung 1A zwei dreiphasige elektrische Energienetze 1a, 1b aufweist, wobei im Unterschied zur ersten Anordnung 1A die Übertragungs-Einrichtung 2e an einer Übertragungsleitung ÜL ohne zusätzlichen zweiten Transformator (s. Fig. 10) in Reihe zwischen die beiden Energienetze 1a, 1b geschaltet ist. Dies entspricht ebenfalls einem Unified Power Flow Controller (UPFC).

Fig. 6 zeigt eine erste Ausführung der Übertragungs-Einrichtung 2a der ersten und dritten Anordnung 1A, 1C, die zwei Mehrstufen-Stromrichter 7a aufweist, die über einen Transformator 8a gekoppelt sind, der auf beiden Anschlussseiten zweiphasig ausgebildet ist (die Anschlussseiten des Transformators bezeichnet man auch als dessen Primärseite und Sekundärseite). Korrespondierend dazu verfügen die mehrphasigen Mehrstufen-Stromrichter 7a netzseitig über je drei Phasenanschlüsse A, B, C und trafoseitig über je zwei Phasenanschlüsse U und V.

Fig. 7 zeigt eine zweite Ausführung der Übertragungs-Einrichtung 2a, 2c der ersten und dritten Anordnung 1A, 1C, die zwei Mehrstufen-Stromrichter 7b aufweist, die über einen im Unterschied zur ersten Ausführung gemäß Fig. 6 auf beiden Anschlussseiten dreiphasigen Transformator 8b gekoppelt sind. Korrespondierend dazu verfügen die Mehrstufen-Stromrichter 7a trafoseitig über je drei Phasenanschlüsse U, V, W.

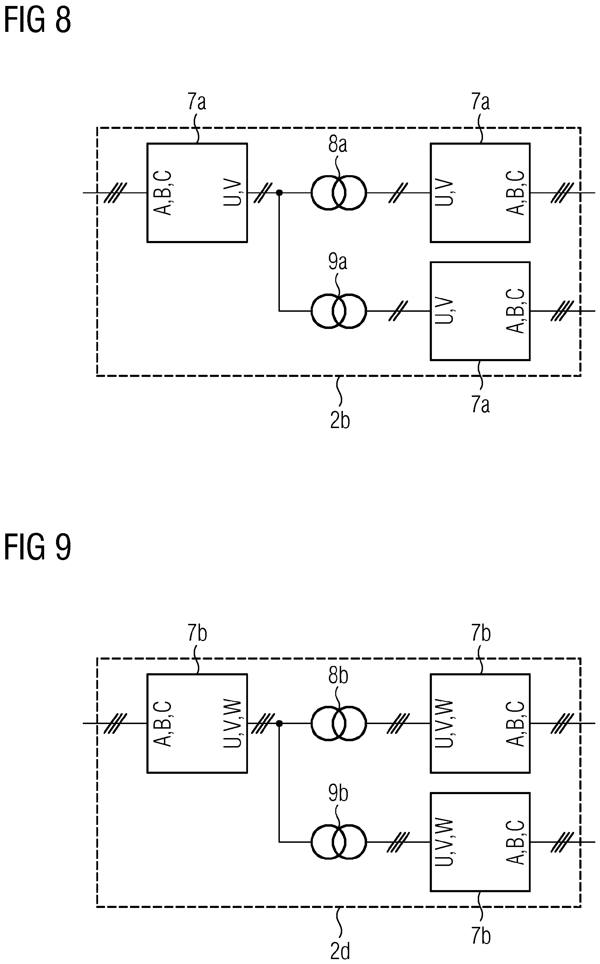

Fig. 8 zeigt eine dritte Ausführung der Übertragungs-Einrichtung 2b der zweiten und vierten Anordnung 1B, 1D, die drei Mehrstufen-Stromrichter 7a (einen ersten, zweiten und dritten Mehrstufen-Stromrichter 7a) aufweist, die über zwei Transformatoren 8a (einen ersten Transformator 8a (in Fig. 8 oben) und einen zweiten Transformator 8a (in Fig. 8 unten)) gekoppelt sind, welche auf beiden Anschlussseiten zweiphasig ausgebildet sind. Korrespondierend dazu verfügen die mehrphasigen Mehrstufen-Stromrichter 7a trafoseitig über je zwei Phasenanschlüsse U und V. Dabei sind der zweite und dritte Mehrstufen-Stromrichter 7a über den ersten und zweiten Transformator 8a miteinander verbunden.

Fig. 9 zeigt eine vierte Ausführung der Übertragungs-Einrichtung 2d der zweiten und vierten Anordnung 1B, 1D, wobei im Unterschied zu Fig. 8 die beiden Transformatoren 8b (der erste Transformator 8b (in Fig. 9 oben) und der zweite Transformator 8b (in Fig. 9 unten)) auf beiden Anschlussseiten jeweils dreiphasig ausgebildet sind.

Fig. 10 zeigt eine fünfte Ausführung der Übertragungs-Einrichtung 2e der fünften Anordnung 1E, die vier Mehrstufen-Stromrichter 7b, 7c (einen ersten Mehrstufen-Stromrichter 7b und einen zweiten, dritten und vierten Mehrstufen-Stromrichter 7c) aufweist, die über einen Transformator 8c gekoppelt sind, welcher auf einer Anschlussseite dreiphasig und auf der anderen Anschlussseite drei Mal zweiphasig ausgebildet ist (also drei zweiphasige Trafoanschlüsse aufweist). Korrespondierend dazu verfügt der ersten Mehrstufen-Stromrichter 7b trafoseitig über drei Phasenanschlüsse U, V, W; die zweiten, dritten und vierten Mehrstufen-Stromrichter 7c verfügen entsprechend trafoseitig über je zwei Phasenanschlüsse U, V.

Fig. 11 zeigt einen Mehrstufen-Stromrichter 7a mit drei netzseitigen Phasenanschlüssen A, B, C auf einer Phasenanschlussseite und zwei trafoseitigen Phasenanschlüssen U, V auf der anderen Phasenanschlussseite. Weiter umfasst der Mehrstufen-Stromrichter 7a sechs Stromrichter-Module 10, wobei für jede Phase zwei Stromrichter-Module 10 in Reihe geschaltet sind. Die elektrischen Verbindungen zwischen den Stromrichter-Modulen 10 bilden die netzseitigen Phasenanschlüsse A, B, C.

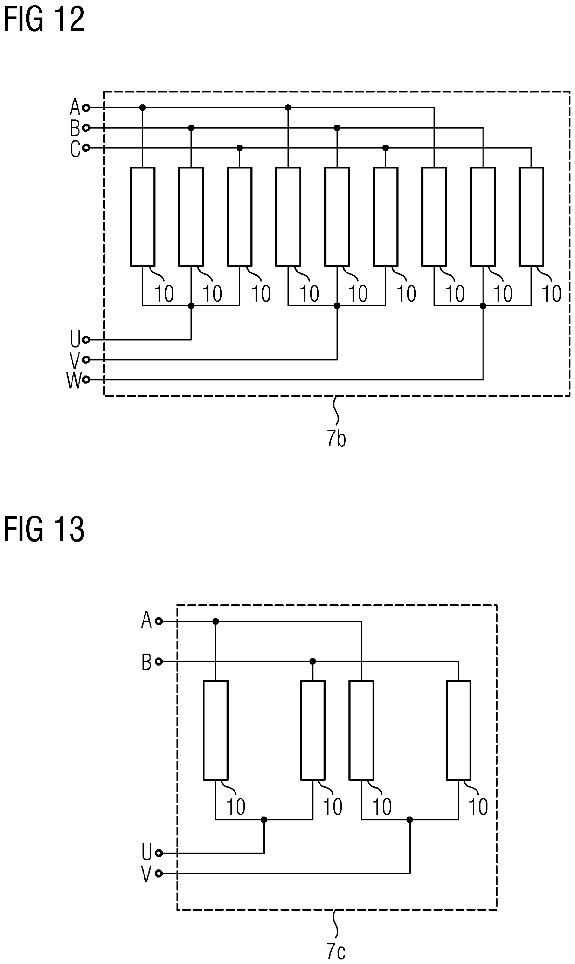

Fig. 12 zeigt einen Mehrstufen-Stromrichter 7b mit drei netzseitigen Phasenanschlüssen A, B, C auf einer Phasenanschlussseite und drei trafoseitigen Phasenanschlüssen U, V, W auf der anderen Phasenanschlussseite. Entsprechend umfasst der Mehrstufen-Stromrichter 7b neun Stromrichter-Module 10.

Fig. 13 zeigt einen Mehrstufen-Stromrichter 7c mit zwei netzseitigen Phasenanschlüssen A, B auf einer Phasenanschlussseite und zwei trafoseitigen Phasenanschlüssen U, V auf der anderen Phasenanschlussseite. Entsprechend umfasst der Mehrstufen-Stromrichter 7c vier Stromrichter-Module 10.

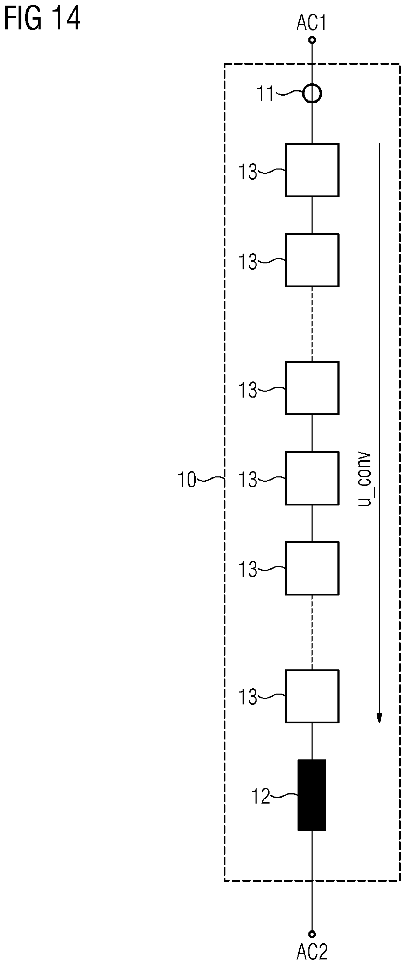

Fig. 14 zeigt ein Stromrichter-Modul 10 (mit Wechselspannungsanschlüssen AC1 und AC2), das aus einer Induktivität 12 und einer Vielzahl in Reihe geschalteter Submodule 13 gebildet ist. Der Strom durch das Stromrichter-Modul 10 wird mittels eines Stromsensors 11 gemessen.

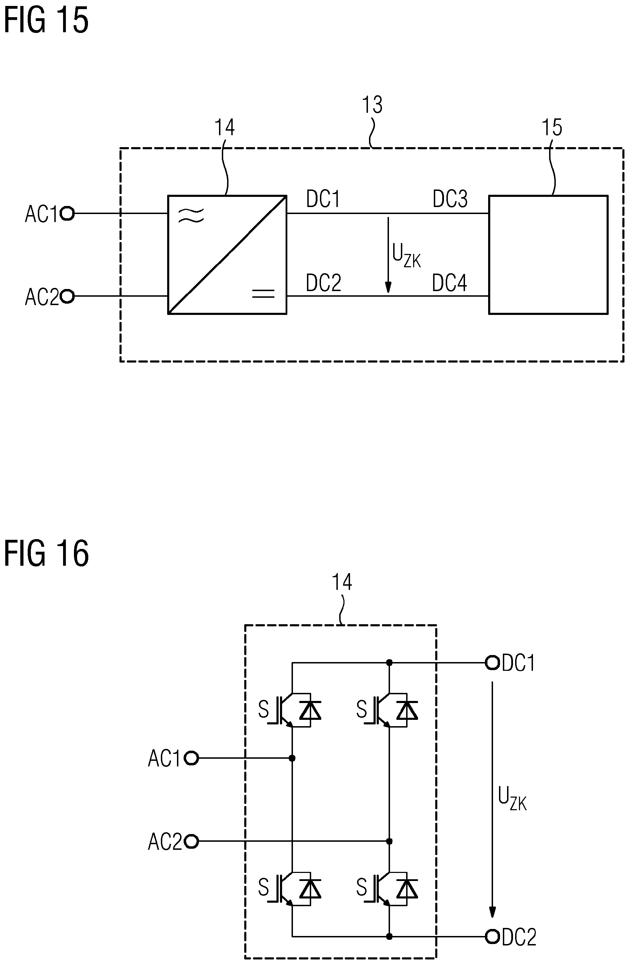

Fig. 15 zeigt eine schematische Schaltung eines Submoduls 13, das aus einem Powermodul 14 besteht, an dessen Zwischenkreis mit den Gleichspannungen DC1, DC2 und DC3, DC4 und damit der Zwischenkreisspannung Uzk ein Kondensatormodul 15 angeschlossen ist.

Fig. 16 zeigt den Aufbau des Powermoduls 14, das vier von der Steuereinrichtung 5 gesteuerte Halbleiterschalter S aufweist, welche als Vollbrücke geschaltet sind. Geeignete Halbleiterschalter S sind z.B. Bipolar-Transistoren mit isolierter Gate-Elektrode (IGBT).

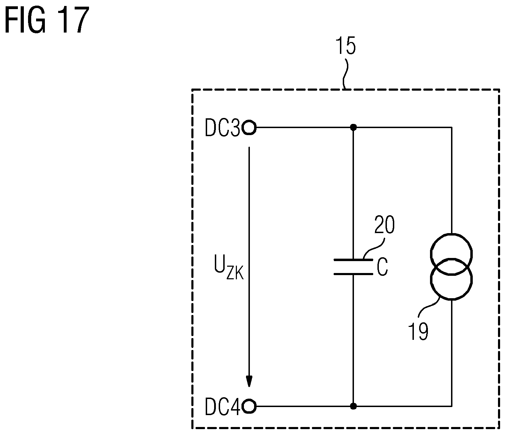

Fig. 17 zeigt den Aufbau des Kondensatormoduls 15, das aus einer Kondensatorspannungsmessung 19 und einem Kondensator 20 besteht, der die Zwischenkreisspannung Uzk puffert.

Die Übertragungs-Einrichtung 2a, 2b, 2c, 2d, 2e steuert also unabhängig von der speziellen Ausführung die Energieübertragung zwischen mehreren elektrischen Energienetzen, die jeweils eine mehrphasige Anschlussspannung bei einer (meist gleicher) Netzfrequenz zur elektrischen Energieversorgung bereitstellen. Dabei weist die Übertragungs-Einrichtung 2a, 2b, 2c, 2d, 2e mindestens zwei mehrphasige Mehrstufen-Stromrichter 7a, 7b, 7c auf, welche jeweils mit einem der Energienetze 1a, 1b, 1c und miteinander über einen mehrphasigen Transformator 8a, 8b, 8c und damit galvanisch voneinander getrennt verbunden sind. Über den Transformator 8a, 8b, 8c fließt bei einer vorgegebenen Übertragungsfrequenz, die größer als jede der Netzfrequenzen ist, elektrische Energie von zumindest einem Energie abgebenden in zumindest ein Energie aufnehmendes Energienetz 1a, 1b, 1c. Die Steuereinrichtung 5 stellt die Energieübertragung in das zumindest eine Energie aufnehmende Energienetz 1a, 1b, 1c entsprechend einer Sollvorgabe ein, indem sie die Mehrstufen-Stromrichter 7a, 7b, 7c entsprechend steuert, so dass trafoseitig jeweils die dafür erforderliche Wechselspannung AC1, AC2 bei einer Übertragungsfrequenz vorhanden ist, die größer als jede der Netzfrequenzen ist. Vorteilhafterweise ist die Übertragungsfrequenz ein Vielfaches (z.B. zwei- oder dreifaches) der Netzfrequenz, bei unterschiedlichen Netzfrequenzen der größten Netzfrequenz. Der Transformator wird deshalb manchmal auch als HochfrequenzTransformator bezeichnet.

## Patentansprüche

1. Übertragungs-Einrichtung (2a, 2b, 2c, 2d, 2e) zur Energieübertragung zwischen mehreren elektrischen Energienetzen (1a, 1b, 1c), die jeweils eine mehrphasige Anschlussspannung bei einer Netzfrequenz zur elektrischen Energieversorgung bereitstellen, wobei die Übertragungs-Einrichtung (2a, 2b, 2c, 2d, 2e) aufweist: a) mehrphasige Mehrstufen-Stromrichter (7a, 7b, 7c), welche jeweils mit einem der Energienetze (1a, 1b, 1c) und miteinander über einen ersten mehrphasigen Transformator (8a, 8b, 8c) und damit galvanisch voneinander getrennt verbunden sind, wobei der erste mehrphasige Transformator (8a, 8b, 8c) dazu eingerichtet ist, dass über diesen bei einer vorgegebenen Übertragungsfrequenz elektrische Energie von zumindest einem Energie abgebenden Energienetz (1a, 1b, 1c) in zumindest ein Energie aufnehmendes Energienetz (1a, 1b, 1c) fließt, wobei die Übertragungsfrequenz größer als jede der Netzfrequenzen ist, und b) eine Steuereinrichtung (5), welche durch Steuerung der Mehrstufen-Stromrichter (7a, 7b, 7c) die Energieübertragung in das zumindest eine Energie aufnehmende Energienetz (1a, 1b, 1c) entsprechend einer Sollvorgabe (SW) einstellt,
**dadurch gekennzeichnet,**
**dass** der erste Transformator (8c) eine dreiphasige Anschlussseite und drei zweiphasige Anschlussseiten aufweist, wobei an den zweiphasigen Anschlussseiten jeweils ein Mehrstufen-Stromrichter (7c) mit trafoseitig zwei Phasenanschlüssen angeschlossen ist.

2. Übertragungs-Einrichtung nach Anspruch 1,
**dadurch gekennzeichnet,**
**dass** die Energienetze (1a, 1b, 1c) dreiphasig oder zweiphasig sind und die Mehrstufen-Stromrichter (7a, 7b, 7c) korrespondierend dazu netzseitig drei bzw. zwei Phasenanschlüsse aufweisen.

3. Übertragungs-Einrichtung nach einem der Ansprüche 1-2, **dadurch gekennzeichnet,**
**dass** ein Mehrstufen-Stromrichter (7a, 7b) über den ersten Transformator (8a, 8b) mit einem zweiten Mehrstufen-Stromrichter (7a, 7b) und über einen zweiten Transformator (9a, 9b) mit einem dritten Mehrstufen-Stromrichter (7a, 7b) verbunden ist, wobei der zweite und dritte Mehrstufen-Stromrichter (7a, 7b) über den ersten und zweiten Transformator (8a, 8b, 9a, 9b) verbunden sind.

4. Übertragungs-Einrichtung nach einem der Ansprüche 1-3, **dadurch gekennzeichnet,**
**dass** jeder Mehrstufen-Stromrichter (7a, 7b, 7c) für jede Phase aus zwei in Reihe geschalteten Stromrichter-Modulen (10) gebildet ist, wobei die elektrischen Verbindungen zwischen den Stromrichter-Modulen (10) die netzseitigen Phasenanschlüsse (A,B,C) bilden, die mit dem Energienetz (1a, 1b, 1c) verbunden sind.

5. Übertragungs-Einrichtung nach Anspruch **dadurch gekennzeichnet,**
**dass** jedes Stromrichter-Modul (10) aus einer Vielzahl in Reihe geschalteter Submodule (13) und einer Induktivität (12) gebildet ist, die von der Steuereinrichtung (5) gesteuerte Halbleiterschalter (S) aufweisen, welche in Vollbrückenschaltung ausgeführt sind.

6. Übertragungs-Einrichtung nach einem der Ansprüche 1-5, **dadurch gekennzeichnet,**
**dass** jeweils der Strom durch die Mehrstufen-Stromrichter (7a, 7b, 7c) und die Anschlussspannungen der Energienetze (1a, 1b, 1c) erfasst und von der Steuereinrichtung (5) zur Einstellung der zu übertragenden elektrischen Energie herangezogen werden.

## Claims

1. Transmission device (2a, 2b, 2c, 2d, 2e) for energy transmission between multiple electrical energy networks (1a, 1b, 1c), each providing a multi-phase supply voltage at a network frequency for electrical energy supply, wherein the transmission device (2a, 2b, 2c, 2d, 2e) comprises: a) multi-phase multilevel power converters (7a, 7b, 7c), which are each connected to one of the energy networks (1a, 1b, 1c) and to one another via a first multi-phase transformer (8a, 8b, 8c) and therefore electrically isolated from each other, wherein the first multi-phase transformer (8a, 8b, 8c) is configured so that, via said first multi-phase transformer, at a specified transmission frequency electrical energy flows from at least one energy-supplying energy network (1a, 1b, 1c) into at least one energy-consuming energy network (1a, 1b, 1c), wherein the transmission frequency is greater than any of the network frequencies, and b) a control device (5), which adjusts the transmission of energy into the at least one energy-receiving energy network (1a, 1b, 1c) according to a setpoint value (SW) by controlling the multilevel power converters (7a, 7b, 7c),
**characterized in that**
the first transformer (8c) has one three-phase connection side and three two-phase connection sides, wherein on each of the two-phase connection sides one multilevel power converter (7c) is connected to two phase connections on the transformer side.

2. Transmission device according to Claim 1,
**characterized in that**
the energy networks (1a, 1b, 1c) are three-phase or two-phase and the multilevel power converters (7a, 7b, 7c) have three or two phase connections corresponding thereto on the network side.

3. Transmission device according to any of Claims 1-2,
**characterized in that**
a multilevel power converter (7a, 7b) is connected via the first transformer (8a, 8b) to a second multilevel power converter (7a, 7b) and via a second transformer (9a, 9b) to a third multilevel power converter (7a, 7b), wherein the second and third multilevel power converters (7a, 7b) are connected via the first and second transformer (8a, 8b, 9a, 9b).

4. Transmission device according to any of Claims 1 to 3,
**characterized in that**
each multilevel power converter (7a, 7b, 7c) for each phase is formed from two series-connected power converter modules (10), wherein the electrical connections between the power converter modules (10) form the network-side phase connections (A, B, C) which are connected to the energy network (1a, 1b, 1c).

5. Transmission device according to Claim 4,
**characterized in that**
each power converter module (10) is formed from a plurality of series-connected sub-modules (13) and an inductance (12), which have semiconductor switches (S) controlled by the control device (5), which are implemented in a full-bridge circuit.

6. Transmission device according to any of Claims 1 to 5,
**characterized in that**
the current through the multilevel power converters (7a, 7b, 7c) and the supply voltages of the energy networks (1a, 1b, 1c) are in each case detected and used by the control device (5) for adjusting the electrical energy to be transmitted.

## Revendications

1. Dispositif (2a, 2b, 2c, 2d, 2e) de transport pour le transport d'énergie entre plusieurs réseaux (1a, 1b, 1c) d'énergie électrique, qui mettent, pour l'alimentation en énergie électrique, à disposition respectivement une tension d'alimentation polyphasée à une fréquence de réseau, le dispositif (2a, 2b, 2c, 2d, 2e) de transport ayant : a) des convertisseurs (7a, 7b, 7c) à plusieurs étages polyphasés, qui sont reliés chacun à l'un des réseaux (1a, 1b, 1c) d'énergie et entre eux par un premier transformateur (8a, 8b, 8c) polyphasé et ainsi séparés galvaniquement les uns des autres, le premier transformateur (8a, 8b, 8c) polyphasé étant conçu de manière à ce qu'il passe par celui-ci, pour une fréquence de transport donnée à l'avance, de l'énergie électrique d'au moins un réseau (1a, 1b, 1c) d'énergie cédant de l'énergie à au moins un réseau (1a, 1b, 1c) d'énergie absorbant de l'énergie, la fréquence de transport étant plus haute que chacune des fréquences de réseau, et b) un dispositif (5) de commande qui, par commande des convertisseurs (7a, 7b, 7c) à plusieurs étages, règle le transport d'énergie dans le au moins un réseau (1a, 1b, 1c) d'énergie absorbant de l'énergie conformément à une prescription (SW) de consigne,
**caractérisé**
**en ce que** le premier transformateur (8c) a un côté de connexion triphasé et trois côtés de connexion diphasés, dans lequel aux côtés de connexion diphasés respectivement un convertisseur (7c) à plusieurs étages est raccordé à deux bornes de phase du côté du transformateur.

2. Dispositif de transport suivant la revendication 1,
**caractérisé**
**en ce que** les réseaux (1a, 1b, 1c) d'énergie sont triphasés ou diphasés et les convertisseurs (7a, 7b, 7c) à plusieurs étages ont d'une manière correspondante à cela du côté du réseau trois ou deux bornes de phase.

3. Dispositif de transport suivant l'une des revendications 1 à 2,
**caractérisé**
**en ce qu'**un convertisseur (7a, 7b) à plusieurs étages est connecté par le premier transformateur (8a, 8b) à un deuxième convertisseur (7a, 7b) à plusieurs étages et par un deuxième transformateur (9a, 9b) à un troisième convertisseur (7a, 7b) à plusieurs étages, les deuxième et troisième convertisseurs (7a, 7b) à plusieurs étages étant connectés par les premier et deuxième transformateurs (8a, 8b, 9a, 9b).

4. Dispositif de transport suivant l'une des revendications 1 à 3,
**caractérisé**
**en ce que** chaque convertisseur (7a, 7b, 7c) à plusieurs étages est constitué pour chaque phase de deux modules (10) de convertisseur montés en série, les liaisons électriques entre les modules (10) de convertisseur formant les bornes (a, b, c) de phase du côté du réseau, qui sont reliées au réseau (1a, 1b, 1c) d'énergie.

5. Dispositif de transport suivant la revendication 4,
**caractérisé**
**en ce que** chaque module (10) de convertisseur est formé d'une pluralité de sous-modules (13) montés en série et d'une inductance (12), qui ont des interrupteurs (S) à semiconducteur, qui sont commandés par le dispositif (5) de commande et qui sont réalisés en circuit en pont complet.

6. Dispositif de transport suivant l'une des revendications 1 à 5,
**caractérisé**
**en ce que** respectivement le courant dans les convertisseurs (7a, 7b, 7c) à plusieurs étages et les tensions d'alimentation des réseaux (1a, 1b, 1c) d'énergie sont détectés et sont mis à profit par le dispositif (5) de commande pour régler l'énergie électrique à transporter.
